# EUROPEAN PATENT APPLICATION

(11) **EP 1 125 647 A1**
(43) Date of publication of application: **22.08.2001**
(21) Application number: 99970040.4
(22) Date of filing: 01.10.1999
(51) Int. Cl.: B09B 3/00, C08J 11/00

(54) **METHOD AND DEVICE FOR DECOMPOSING CIRCUIT MEMBER BY WATER IN SUPERCRITICAL FLUID STATE**

(30) Priority: 02.10.1998 JP 28140098
(71) Applicant: Advantest Corporation, Tokyo 179-0071 (JP)
(72) Inventor: SUGIMOTO, Yoshimi Advantest Corporation, Tokyo 179-0071 (JP); WATANABE, Masao Advantest Corporation, Tokyo 179-0071 (JP)
(74) Representative: Picard, Jean-Claude Georges
(86) International application number: JP9905404
(87) International publication number: WO0020140

(57) **Abstract**

In the present invention, water 13 in a liquid state is encapsulated within hermetically sealed container 2 together with circuit components 30 and then made a supercritical fluid by both heating water 30 in a liquid state by heating means 4 to at least a prescribed temperature and pressurizing to at least a prescribed pressure. A supercritical fluid has an extremely high frequency of intermolecular collisions and therefore exhibits extraordinary power as a solvent and a capacity for effectively activating various reactions, and circuit components 30 that are difficult to dissolve in water in a liquid or gas state therefore can be quickly and effectively dissolved by water in a supercritical fluid state. Further, various metals can be recovered from circuit components 30 by mixing sulfur 14 with water 13 in liquid state.

## Description

### Technical Field

The present invention relates to a method and device for dissolving circuit components, and more particularly to a method and device for dissolving circuit components using water in a supercritical fluid state.

### Background Art

In recent years, electronic equipment such as computer systems has come into wide use, and various types of circuit components such as circuit substrates (PWB; Printed Wiring Board), chip components, display panels, and batteries, are used in this type of electronic equipment.

Current circuit components are formed with extremely minute structures, and the various parts are each bonded together as a single unit, such as when chip components are surface-mounted to a circuit substrate. Dissolving circuit components is therefore quite problematic, and under current circumstances, circuit components that are to be discarded are often simply crushed and consigned to landfill.

Although circuit components are merely crushed and placed in landfill under current circumstances, useful metals such as gold, tin, copper, and lead, and toxic substances such as cadmium are widely used in circuit components.

When discarding circuit components, therefore, circuit components are preferably dissolved to recycle the various substances or to take special measures. As described, however, circuit components of recent years generally have extremely minute structure and the various parts are bonded together as a single unit, and it is therefore extremely difficult to dissolve the circuit components to allow recovery of each substance.

Treatment methods have been developed in which substances such as gold are recovered by dissolving circuit components using, for example, hydrogen fluoride. However, hydrogen fluoride is extremely toxic and difficult to handle, and necessitates large-scale processing facilities.

Nevertheless, the volume of circuit components that are discarded is constantly increasing, and under the current circumstances, an effective treatment of circuit components to be discarded using hydrogen fluoride has still not been realized, and as described hereinabove, circuit components are currently being crushed and consigned to landfill.

### Disclosure of Invention

It is an object of the present invention to provide a component processing method and device that allow effective and rapid dissolution of circuit components without requiring, for example, toxic materials, and that also allow recovery of rare or toxic substances.

In one component processing method according to the present invention, water (H₂O) in a liquid state is heated to at least a prescribed temperature and pressurized to at least a prescribed pressure to become a supercritical fluid, and the circuit components that are to be processed are dissolved in the water in this supercritical fluid state. In the component processing method of the present invention, therefore, circuit components can be effectively dissolved by water, which is non-toxic, easy to handle, and inexpensive, and a variety of materials can be easily recovered from the dissolved circuit components.

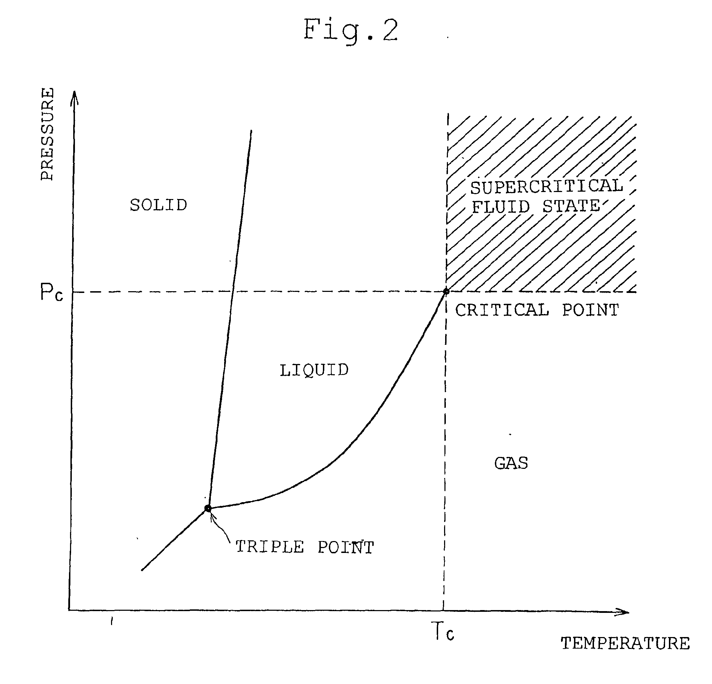

Referring now to Fig. 2, a simple explanation is presented regarding supercritical fluid. Matter generally changes between solid, liquid, and gas depending on the relation of temperature and pressure, but as shown in the figure, matter enters a supercritical fluid state in a range at and above a critical point of prescribed temperature Tc and prescribed pressure Pc. This state combines the properties of gas and liquid and exhibits high density, a remarkable level of thermal agitation of molecules, and a frequency of intermolecular collisions that is far higher than for solid or gas.

Water in a supercritical fluid state therefore exhibits extraordinary properties as a solvent and can effectively activate a variety of reactions. Circuit components that are difficult to dissolve in water in a liquid or gas state can be quickly and effectively dissolved by water in a supercritical fluid state.

The above-described component processing method also permits control of the temperature and pressure of water in a supercritical fluid state. In this case, water in a supercritical fluid state both exhibits extraordinary properties as a solvent and effectively activates a variety of reactions, and because these properties can be freely regulated through changes in temperature and pressure, the state of the process of dissolving circuit components can be adjusted at will, and the various structures and substances of circuit components can be effectively dissolved.

According to another component processing method of the present invention, water in a liquid state is encapsulated within a hermetically sealed container together with the circuit components to be subjected to processing, the interior of this hermetically sealed container is pressurized to a prescribed pressure by supplying a pressurizing medium, and the interior of the hermetically sealed container that has been pressurized to a prescribed pressure is heated to make the water a supercritical fluid having at least a prescribed temperature and at least a prescribed pressure.

The component processing method according to this invention therefore enables circuit components to be effectively dissolved through the use of water, which is nontoxic, easily managed, and inexpensive; and further, allows the easy recovery of various materials from the circuit components that are dissolved. Moreover, since pressure is applied by the supply of a pressurizing medium after encapsulating water within the hermetically sealed container together with the circuit components and the interior of the hermetically sealed container in this state is heated to place water in a supercritical fluid state, the process of dissolving circuit components by water in a supercritical fluid state can be realized with simple equipment.

The above-mentioned component processing method also permits control of the temperature and pressure of water in a supercritical fluid state by heating and reducing pressure. In this case, the properties of a supercritical fluid, such as extraordinary powers as a solvent and the ability to activate various reactions, can be regulated at will through changes in temperature and pressure, whereby the conditions of dissolving circuit components can be regulated at will by simple operations and the dissolution of the various structures and materials of circuit components can be carried out effectively.

The above-described component processing method also permits substances that are produced from circuit components that have been dissolved in water in a supercritical fluid state to be discharged as appropriate from the hermetically sealed container. In this case, the internal pressure of the hermetically sealed container increases with the production of the various substances from circuit components that have been dissolved by water in a supercritical fluid state under the conditions of high temperature and high pressure, but appropriate discharge of the produced substances allows the interior of the hermetically sealed container to be maintained at a desired pressure and the process of dissolving circuit components by water in a supercritical fluid state to proceed effectively.

The aforementioned component processing method permits the separate storage of substances discharged from the hermetically sealed container. In this case, substances such as organic molecules of resin are produced from the circuit components that have been dissolved by water in a supercritical fluid state, and these substances that are thus produced and discharged from the hermetically sealed container can be stored, thereby allowing the heat value of these substances to be used as energy or the substances themselves to be reused as raw materials.

In the above-described component processing method, the pressurizing medium may be composed of inert gas. In this case, water is encapsulated in the hermetically sealed container, pressurized by a pressurizing medium of inert gas, and heated to become a supercritical fluid. The various substances produced from the circuit components under these conditions of high temperature and high pressure therefore do not react with the pressurizing medium, and the various substances produced from the circuit components can be recovered effectively.

In the above-mentioned component processing method, a reactive substance that combines with prescribed metals present within the circuit components may be mixed with the liquid water. In this case, the reactive substance combines with the prescribed metals when the metals are produced from circuit components that have been dissolved by water in a supercritical fluid state, and the prescribed metals can then be recovered as compounds.

In the above-described component processing method, the reactive substance that is mixed with water may be sulfur. In this case, sulfur that is mixed in the water that becomes a supercritical fluid combines with gold that is used as a metal in the circuit components to produce Au(HS)₂. In this way, gold, which is often used in circuit components, can be recovered as a compound. In addition, SnS can be recovered as the compound with sulfur when tin is used as the metal in the circuit components, PbS can be recovered when lead is used, and CuS can be recovered when copper is used. Generally, a large quantify of solder made of an alloy of Sn and Pb is used in the circuit components. In addition, a large number of printed circuits made of Cu are formed on the circuit components.

In the aforementioned component processing method, the volume of the reactive substance that is mixed with the water may be regulated according to the volume of a prescribed metal present in circuit components. In this case, the volume of the reactive substance that is mixed in the water is regulated according to the volume of metal to allow exact combination with and recovery of the metal of the circuit components that have been dissolved.

In the above-described component processing method, the water in a supercritical fluid state that has completed the dissolution of circuit components can be converted back to a liquid state by reducing the temperature and pressure, and this liquid-state water can then be cooled at normal pressure and solidified. In this case, water in a supercritical fluid state is caused to solidify after completing dissolution of circuit components, thereby enabling separation of the various substances that are mixed in the water in a supercritical fluid state. The various substances produced from the circuit components can be easily recovered because the solubility of substances (molecules and atoms) in ice, which is solidified water, is on the order of 0.001%.

In the component processing method of the component processing device of this invention, water is encapsulated within a hermetically sealed container together with the circuit components that are to be processed, and the interior of this hermetically sealed container is pressurized to a prescribed pressure by supplying a pressurizing medium by a medium supplying means. The interior of the hermetically sealed container that is pressurized to a prescribed pressure is then heated by a heating means to convert the water to a supercritical fluid, and circuit components are dissolved by the water in this supercritical fluid state.

In other words, circuit components can be effectively dissolved by means of water, which is nontoxic, easy to handle, and inexpensive, and various substances can be easily recovered from the circuit components that have been dissolved in this way. Moreover, the dissolution of circuit components by means of water in a supercritical fluid state can be realized with simple equipment by first encapsulating water in a hermetically sealed container together with circuit components, pressurizing by supplying a pressurizing medium, and then heating the interior of the hermetically sealed container in this state to convert the water to a supercritical state.

In the above-mentioned component processing device, an internal pressure reducing means may discharge, as appropriate, substances present in the interior of a hermetically sealed container, and the operation of this internal pressure reducing means and a heating means may be controlled by a status control means. In this case, water in a supercritical fluid state both exhibits extraordinary properties as a solvent and effectively activates various reactions and these properties are freely regulated through changes in temperature and pressure, thus enabling regulation at will of the state of the dissolution of circuit components and enabling the effective dissolution of the various structures and substances of the circuit components.

In the above-described component processing device, an internal pressure reducing means may discharge, as appropriate, substances present inside the hermetically sealed container, and substances that are discharged in this way may be separately stored by a substance storing means. In this case, the heat of the substances can be used as energy, and the substances may be used again as raw materials.

In the aforementioned component processing device, water in a liquid state that has completed the process of dissolving circuit components in a supercritical fluid state may be cooled at atmospheric pressure by a substance separating means to bring about solidification of the water. In this case, the solubility of substances (molecules and atoms) in ice, which is solidified water, is on the order of 0.001%, whereby the various substances that were mixed in the water in a supercritical fluid state can be caused to separate out, and the various substances produced from the circuit components can be easily recovered.

Finally, each of the various means described in this invention may be formed so as to realize its function, and for example, may include any of, or a combination of, dedicated hardware, a computer endowed with appropriate functions by means of a program, and functions realized inside a computer by means of an appropriate program.

### Brief Description of the Drawings

Fig. 1 is a schematic diagram showing a component processing system which is an embodiment of the component processing device according to the present invention, and
Fig. 2 is a characteristics chart showing the change in the state of water due to changes in temperature and pressure.

### Best Mode for Carrying Out the Invention

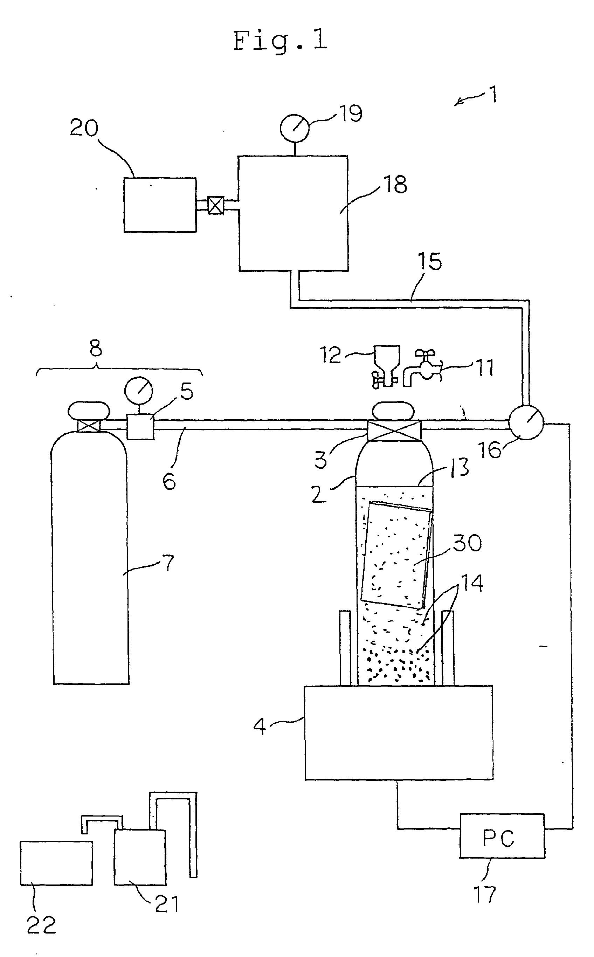

Referring now to Fig. 1, component processing system 1, which is an embodiment of the component processing device according to the present invention, includes: hermetically sealed container 2, this hermetically sealed container 2 being made up of a stainless steel high-pressure cylinder having hatch 3 that can be opened and closed at will. Heating device 4 is installed at the base of this hermetically sealed container 2, and this heating device heats hermetically sealed container 2.

Intake pipe 6 having pressure regulating valve 5 is arranged at hatch 3 of hermetically sealed container 2, and helium cylinder 7 is connected to this intake pipe 6 in such a way as to allow exchange of cylinders, this arrangement thus forming medium supply mechanism 8. This medium supply mechanism 8 supplies the inert gas helium to the interior of hermetically sealed container 2 as a pressurizing medium and pressurizes the interior of this hermetically sealed container 2 to an initial pressure of 100-110 atm.

Helium cylinder 7 is a product that is widely available on the market and contains helium gas at a pressure of 180 atm. The internal pressure of 180 atm of this helium cylinder 7 enables medium supply mechanism 8 to pressurize hermetically sealed container 2 to an internal pressure of 100-110 by merely adjusting pressure regulating valve 5 of intake pipe 6.

Water supply pipe 11 and substance insertion container 12 are arranged at the top of hatch 3 of hermetically sealed container 2. Water supply pipe 11 supplies water (H₂O) 13 at normal temperature and normal pressure to the interior of hermetically sealed container 2 when hatch 3 is open, and substance insertion container 12 introduces sulfur 14 powder to the interior of hermetically sealed container 2 when hatch 3 is open.

Exhaust pipe 15 is also arranged at hatch 3 of hermetically sealed container 2, and this exhaust pipe 15 includes pressure regulating valve 16, which is an internal pressure reducing means. This pressure regulating valve 16 also serves as a safety valve, and discharges, as appropriate, substances present inside hermetically sealed container 2 to exhaust pipe 15.

Personal computer 17, which functions as a status control means, is wired to the drive mechanism (not shown) of this pressure regulating valve 16 and the previously described heating device 4, and this personal computer 17 controls the operations of pressure regulating value 16 and heating device 4.

In greater detail, above-described personal computer 17 includes as hardware at least CPU (Central Processing Unit), ROM (Read Only Memory), RAM (Random Access Memory), and I/F (Interface) (not shown), and pressure regulating valve 16 and heating device 4 are operated and controlled in accordance with data processing by the CPU corresponding to various programs and parameters established beforehand in ROM and/or RAM .

In addition, substance storing container 18 is piped to exhaust pipe 15, and this substance storing container 18 includes pressure gauge 19 and exhaust pump 20. Substance storing container 18 separately stores material that is discharged from hermetically sealed container 2 by pressure regulating value 16, and exhaust pump 20 discharges the gas inside substance storing container 18 to the outside.

In component processing system 1 according to this embodiment, moreover, intake pump 21 and freezer 22, which is a substance separating means, are provided separately from the above-mentioned apparatus. Intake pump 21 draws in water 13 in a liquid state at normal temperature and normal pressure from the interior of hermetically sealed container 2 and supplies this water 13 to freezer 22. Freezer 22 cools water 13 supplied from the interior of hermetically sealed container 2 to between 0 and -5°C at normal pressure and thereby solidifies the water.

Explanation is next presented regarding the component processing method realized by component processing system 1 according to this embodiment in the above-described construction. Component processing system 1 of this embodiment is directed to processing circuit components 30 used in various electronic equipment such as circuit substrates, chip parts, display panels, and batteries.

First, hatch 3 of hermetically sealed container 2 is opened, and desired circuit components 30 are introduced into hermetically sealed container 2, water (H₂O) 13 at normal temperature and normal pressure is supplied to hermetically sealed container 2 from water supply pipe 11, and sulfur 14 is introduced into hermetically sealed container 2 from substance insertion container 12.

At this time, water 13 is, for example, ultrapure water, and is supplied in a volume corresponding to the capacity of hermetically sealed container 2 and the size of circuit components 30. Sulfur 14 is introduced in a volume that exactly corresponds to the volume of metals such as gold (Au), tin (Sn), lead (Pb), and copper (Cu) that are predicted to be present within circuit components 30.

Hatch 3 is next closed, hermetically sealed container 2 is sealed, and helium gas at normal temperature and at a pressure of 180 atm of helium cylinder 7 is supplied into hermetically sealed container 2 up to a pressure of 100-110 atm by the operation of pressure regulating valve 5. Hermetically sealed container 2 is next heated by heating device 4, which is operated and controlled by personal computer 17, and water 13 in liquid state inside hermetically sealed container 2 is heated to a temperature of at least 375 °C at a pressure of at least 220 atm to become a supercritical fluid as shown in Fig. 2.

As mentioned above, a supercritical fluid combines the properties of a gas and a liquid and exhibits an extremely high frequency of intermolecular collisions, extraordinary power as a solvent, and an ability to effectively activate a variety of reactions, and as a result, circuit components 30 that are difficult to dissolve in water in a liquid or gas state can be effectively and quickly dissolved.

At this time, resin gas or organic molecules are produced from circuit components 30 that have been dissolved at high temperature, and the pressure within hermetically sealed container 2 therefore can be expected to increase. However, personal computer 17 appropriately controls the operation of both heating device 4 and pressure regulating valve 16 and the dissolution of circuit components 30 therefore proceeds with the pressure within hermetically sealed container 2 maintained at a proper level.

In particular, in component processing system 1 according to this embodiment, personal computer 17 actively controls heating device 4 and pressure regulating valve 16 to variously adjust the properties of water in a supercritical fluid state so as to effectively dissolve the various structures and various substances of circuit components 30.

Furthermore, when pressure regulating valve 16 appropriately discharges the substances present within hermetically sealed container 2 as described hereinabove, the discharged substances in the component processing system 1 according to this embodiment are separately stored in substance storing container 18. As a result, the heat of these substances can be used as energy, and the stored substances can also be used again as raw materials.

In addition, metals such as gold (Au), tin (Sn), lead (Pb), and copper (Cu) can be assumed to be present within the substances that are produced from circuit components 30 that have been dissolved as described hereinabove. In component processing system 1 according to this embodiment, sulfur (S) 14 is mixed into water 13. The various metals described above therefore react with sulfur 14 to produce the compounds Au(HS)₂, SnS, PbS, and CuS, and these compounds are present within the water in a supercritical fluid state.

When the process of dissolving circuit components 30 is completed by operations of a prescribed time interval, personal computer 17 halts the operation of heating device 4 to reduce the temperature inside hermetically sealed container 2 to normal temperature, and controls the operation of pressure regulating valve 16 to reduce the pressure inside hermetically sealed container 2 to normal pressure.

Water 13 in liquid state, in which the compounds such as Au(HS)₂ are mixed, is thus accumulated inside hermetically sealed container 2. This water 13 in liquid state at normal temperature and normal pressure is then transferred by means of intake pump 21 from hermetically sealed container 2 with hatch 3 opened to freezer 22, and freezer 22 cools the liquid-state water 13 to a temperature of from 0 to -5°C at normal pressure to cause the water to solidify.

The solubility of substances (molecules and atoms) in the ice, i.e., solidified water 13, is on the order of 0.001%, and the compounds such as Au(HS)₂, SnS, PbS, and CuS that are mixed in water 13 therefore separate out, thereby enabling easy recovery of useful metals such as gold (Au), tin (Sn), lead (Pb), and copper (Cu) from the separated compounds.

In component processing system 1 according to this embodiment, circuit components 30 are dissolved by water that is converted to a supercritical fluid as described hereinabove, and as a result, circuit components 30 having microstructures and solid-state construction can be quickly and effectively dissolved by water, which is nontoxic, easy to handle, and inexpensive.

Moreover, because water 13 in a liquid state is introduced into hermetically sealed container 2 together with circuit components 30, following which pressure is applied to a prescribed pressure by the supply of helium gas and water 13 in this state is heated to arrive at a supercritical fluid state, water in a supercritical fluid state can be easily obtained using simple equipment.

In particular, the various substances produced from the circuit components 30 that have been dissolved do not easily react with the pressurizing medium because the medium for pressurizing water 13 in a liquid state to an initial pressure is the inert gas helium as described hereinabove, and the various substances can therefore be effectively recovered from circuit components 30.

Because the interior of hermetically sealed container 2 is pressurized to a pressure of 100-110 atm using the pressure of 180 atm of helium cylinder 7 that is commonly available on the market, the interior of hermetically sealed container 2 can be pressurized to a desired initial pressure by means of an extremely simple construction that does not call for a specialized compressor (not shown).

Further, various metals can be recovered from circuit components 30 by mixing sulfur 14 with water 13 in liquid state as described hereinabove, and the metals of circuit components 30 that have been dissolved can be recovered without excess or deficiency because the volume of sulfur 14 that is mixed with water 13 is adjusted according to the volume of substances present within circuit components 30.

The aforementioned embodiment takes as an example of component processing system 1, which is the component processing device, an experimental device that is still in the trial stage, and it is assumed that various operations are carried out manually. In realizing a component processing device (not shown) for actual commercial operations, however, each part is preferably automated for integrated control.

In the above-described embodiment, a case was described in which, for example, the operator manually introduces circuit components 30 to be processed into hermetically sealed container 2, but in a component processing device for actual commercial operations, the above-mentioned operation is preferably performed automatically by a material conveying mechanism such as a belt conveyor or robot arm.

Similarly, the supply of water 13 to hermetically sealed container 2 and the introduction of sulfur 14 are preferably performed automatically by various mechanisms, the removal of water 13 from hermetically sealed container 2 and the solidification of water 13 are also preferably automated, and the series of operations are preferably carried out under the integrated control of a computer system.

In addition, component processing system 1 according to the above-described embodiment includes heating device 4 for heating water to a supercritical fluid state inside hermetically sealed container 2 and pressure regulating valve 16 for reducing pressure, but does not include a cooling means for forcibly cooling water in a supercritical fluid state or an internal pressurizing means for applying pressure.

As a result, the aforementioned embodiment enables:
(1) maintaining the temperature and pressure of water in a supercritical fluid state at a uniform level;
(2) increasing the temperature and pressure of water in a supercritical fluid state by heating;
(3) decreasing the temperature and pressure of water in a supercritical fluid state by reducing pressure;
(4) increasing the temperature of water in a supercritical fluid state while maintaining the pressure at a fixed level by heating and reducing pressure;
(5) decreasing the pressure of water in a supercritical fluid state while maintaining the temperature at a fixed level by heating and reducing pressure; and
(6) decreasing the pressure of water in a supercritical fluid state while increasing the temperature by heating and decreasing pressure.

However, the above-described embodiment has difficulty in:
(7) maintaining the pressure of water in a supercritical fluid state at a fixed level while reducing the temperature;
(8) increasing the pressure of water in a supercritical fluid state while maintaining the temperate at a fixed level; and
(9) increasing the pressure of water in a supercritical fluid state while decreasing the temperature.

Experimentation by the inventors has confirmed the effective dissolution of circuit components 30 by experimental component processing system 1 that was produced on a trial basis, but in a component processing device for actual commercial operations, a cooling means for forcibly cooling water in a supercritical fluid state and an internal pressurizing means for forcibly pressurizing are preferably added for cases requiring the operations of the above-mentioned items (7)-(9).

In the above-described embodiment, moreover, an example was presented in which water 13 was ultrapure water to allow effective recovery without unwanted reactions with substances produced from circuit components 30, but tap water may also be used directly as water 13 in cases in which priority is given to the process of dissolving circuit components 30 over the recovery of substances.

In the aforementioned embodiment, an example was presented in which gold (Au) was considered as a substance to be recovered from circuit components 30 and sulfur (S) was mixed with water 13 in a liquid state as a reactant. However, the reactant that is mixed in water 13 in a liquid state may also be varied according to the substance that is to be recovered.

## Claims

1. A method of processing components, comprising the steps of:
heating water (H₂O) in a liquid state to at least a prescribed temperature and pressurizing to at least a prescribed pressure to make said water a supercritical fluid; and
dissolving circuit components to be processed by said water in a supercritical fluid state.

2. A method according to claim 1, further comprising a step of controlling the temperature and pressure of said water in a supercritical fluid state.

3. A component processing method comprising the steps of:
encapsulating water (H₂O) in a liquid state _ inside a hermetically sealed container together with circuit components that are to be processed;
pressurizing the interior of said hermetically sealed container to a prescribed pressure by supplying a pressurizing medium; and
heating the interior of said hermetically sealed container that has been pressurized to said prescribed pressure to make said water a supercritical fluid having at least a prescribed temperature and at least a prescribed pressure.

4. A method according to claim 3, further comprising a step of controlling the temperature and pressure of said water in a supercritical fluid state by heating and reducing pressure.

5. A method according to claim 3, further comprising a step of appropriately discharging from said hermetically sealed container substances that are produced by said circuit components that have been dissolved in said water in a supercritical fluid state.

6. A method according to claim 5, further comprising a step of separately storing substances that have been discharged from said hermetically sealed container.

7. A method according to claim 3, wherein said pressurizing medium is composed of an inert gas.

8. A method according to claim 1, further comprising a step of mixing into said water in liquid state a reactive substance that combines with a prescribed metal present in said circuit components.

9. A method according to claim 3, further comprising a step of mixing into said water in liquid state a reactive substance that combines with a prescribed metal present in said circuit components.

10. A method according to claim 8, wherein said reactive substance that is mixed into said water is sulfur (S).

11. A method according to claim 9, wherein said reactive substance that is mixed into said water is sulfur (S).

12. A method according to claim 8, further comprising a step of adjusting the volume of said reactive substance that is mixed into said water, according to the volume of prescribed metal present in said circuit components.

13. A method according to claim 9, further comprising a step of adjusting the volume of said reactive substance that is mixed into said water, according to the volume of prescribed metal present in said circuit components.

14. A method according to claim 1, further comprising the steps of:
changing said water in a supercritical fluid state that has completed the process of dissolving said circuit components to a liquid state by reducing temperature and pressure; and
solidifying said water in a liquid state by cooling at normal pressure.

15. A method according to claim 3, further comprising the steps of:
changing said water in a supercritical fluid state that has completed the process of dissolving said circuit components to a liquid state by reducing temperature and pressure; and
solidifying said water in a liquid state by cooling at normal pressure.

16. A component processing device comprising:
a hermetically sealed container in which water (H₂O) in a liquid state is encapsulated together with circuit components to be processed;
medium supplying means for pressurizing the interior of said hermetically sealed container to a prescribed pressure by the supply of a pressurizing medium; and
a heating means for heating the interior of said hermetically sealed container that has been pressurized to said prescribed pressure and making said water a supercritical fluid.

17. A device according to claim 16, further comprising:
internal pressure reducing means for appropriately discharging substances present inside said hermetically sealed container; and
status control means for controlling the operations of said internal pressure reducing means and said heating means.

18. A device according to claim 16, further comprising:
internal pressure reducing means for appropriately discharging substances present inside said hermetically sealed container; and
substance storing means for separately storing substances that have been discharged from said hermetically sealed container by said internal pressure reducing means.

19. A device according to claim 16, further comprising:
substance separating means for cooling and solidifying said water that has been changed from a supercritical fluid to a liquid state after completing the process of dissolving said circuit components.
